# EUROPEAN PATENT APPLICATION

(11) **EP 4 105 531 A1**
(43) Date of publication of application: **21.12.2022**
(21) Application number: 22179148.6
(22) Date of filing: 15.06.2022
(51) Int. Cl.: F16L 11/12, F16L 11/08, F16L 53/37, F16L 53/38, B29C 45/02, B29C 45/28, B29C 45/54, B29C 45/27, F16L 11/04, F16L 11/127

(54) **HOSE FOR A MOLDING APPARATUS, MOLDING APPARATUS HAVING A HOSE AND PACKAGING MACHINE HAVING A MOLDING APPARATUS**

(30) Priority: 18.06.2021 EP 21180374
(71) Applicant: Tetra Laval Holdings & Finance S.A., 1009 Pully (CH)
(72) Inventor: GOLFIERI, Daniele, 41013 Castelfranco Emilia (IT); GUIDETTI, Gloria, 40133 Bologna (IT); MAZZA, Renan Melhado, 21219 Malmö (SE); STAGLIANO, Armando, 41124 Modena (IT); ÅKESSON, Bo, 24634 Löddeköpinge (SE); HAHNE, Mats, 24652 Löddeköpinge (SE)
(74) Representative: Tetra Pak - Patent Attorneys SE

(57) **Abstract**

There is described a hose (5) for a molding apparatus (1). The hose (5) comprises a multilayer-structure comprising at least a core tube (20) having a conveying space (21) for receiving and guiding a molten polymer, a heating device and a plurality of layers (22, 23, 24, 25, 26) arranged around the core tube (20) and on top of one another. At least one of the core tube (20) and/or one or more of the plurality of layers (22, 23, 24, 25, 26) comprises graphene-based material and/or pyrolytic graphite and/or silicon oxide (SiOx).

## Description

### TECHNICAL FIELD

The present invention relates to a hose for a molding apparatus, in particular the hose being configured to receive a molten polymer and to maintain the molten polymer in the molten state.

Advantageously, the present invention also relates to a molding apparatus for molding plastic components, such as opening and/or outpouring devices, onto a multilayer packaging material.

Advantageously, the present invention also relates to a packaging machine for forming composite packages for a pourable product, in particular a pourable food product. In particular, the composite package comprises at least a main body formed from a multilayer packaging material and an additional component, such as an opening and/or outpouring device, molded to the main body. The packaging machine comprises a molding apparatus configured to mold the additional component to the multilayer packaging material.

### BACKGROUND ART

As is known, many liquid or pourable food products, such as fruit juice, UHT (ultra-high-temperature treated) milk, wine, tomato sauce, etc., are sold in composite packages at least partially made from a multilayer packaging material.

A typical example is the parallelepiped-shaped composite package for liquid or pourable food products formed from a multilayer packaging material. One example of composite package is known as Tetra Brik^{®} Aseptic (registered trademark). Such composite packages are made by sealing and folding the laminated multilayer packaging material. The packaging material has a multilayer structure comprising a base layer, e.g. of paper or cardboard, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Composite packages of this sort are normally produced on fully automatic packaging machines, some of which advance and sterilize a web of the multilayer packaging material, which is then formed into a tube and filled with the pourable product before its formation into individual sealed composite packages.

It is known that some types of composite packages also comprise respective opening and/or outpouring devices, which allow to be manipulated for accessing the pourable product and/or for allowing the outpouring of the pourable product.

There are variations of the Tetra Brik^{®} Aseptic packages, which comprise an opening and/or outpouring device, which is molded around a designated pour opening area of a top wall of a respective main body formed from the multilayer packaging material.

Another type of composite packages is known as Tetra Top^{®} (registered trademark), which comprises a main body formed from the multilayer packaging material and a plastic top portion defining the opening and/or outpouring device molded to the main body. The top portion (the opening and/or outpouring device) of the Tetra Top^{®} package comprises a neck having a pouring outlet onto which a removable closure is applied so as to selectively open and close the pouring outlet.

While the opening and/or outpouring devices of the Tetra Top^{®} packages are molded to the partially formed main body, the opening and/or outpouring devices of the Tetra Brik^{®} Aseptic packages are molded onto a web of the multilayer packaging material and prior to the folding of the web.

In order to provide the composite packages with the opening and/or outpouring devices, the automatic packaging machines also comprise a molding apparatus for molding the opening and/or outpouring devices onto the multilayer packaging material.

A typical molding apparatus comprises:
- a conditioning apparatus, which is configured to receive a solid polymer precursor, such as solid polymer pellets, and to melt the polymer precursor so as to obtain a molten polymer to be used for the molding of the opening and/or outpouring devices;
- an injection device having at least one mold unit couplable to the multilayer packaging material and configured to inject the molten polymer into the mold unit so as to form the component; and
- a hose fluidically connecting the conditioning apparatus with the injection device and configured to direct the molten polymer from the conditioning apparatus to the injection device.

The hose comprises a core tube through which the molten polymer is fed and a heating device so as to guarantee that the molten polymer remains in the molten state.

From time to time, the hose needs to be exchanged as the molten polymer promotes a degradation of the core tube due to the presence of oxygen within the core tube.

Thus, even though such hoses and the molding apparatuses with which they are equipped achieve excellent working results, a desire is felt in the sector to further improve the known hoses so as to further increase the lifetime of the hoses.

It is a further desire in the sector to improve the known hoses so as to reduce the maintenance work that is needed to exchange the hoses.

### DISCLOSURE OF INVENTION

It is therefore an object of the present invention to provide in a straightforward and low-cost manner an improved hose for a molding apparatus, which comes along with a prolonged lifetime.

Furthermore, it is an object of the present invention to provide in a straightforward and low-cost manner an improved molding apparatus, which requires little maintenance work.

It is also an object of the present invention to provide in a straightforward and low-cost manner an improved packaging machine for the formation of composite packages.

According to the present invention, there is provided a hose as claimed in claim 1.

Preferred non-limiting embodiments of the hose are claimed in the respective dependent claims.

According to the present invention, there is also provided a molding apparatus as claimed in claim 11.

Preferred non-limiting embodiments of the molding apparatus are claimed in the claims being directly or indirectly dependent on claim 11.

According to the present invention, there is also provided a packaging machine according to claim 14.

### BRIEF DESCRIPTION OF THE DRAWINGS

A non-limiting embodiment of the present invention will be described by way of example with reference to the accompanying drawings, in which:
Figure 1 is a schematic view of a molding apparatus having at least one hose according to the present invention, with parts removed for clarity;
Figure 2 is a schematic and enlarged view of a detail of the molding apparatus, with parts removed for clarity; and
Figure 3a to 3e are respective cross-sectional views of variations of the hose according to the present invention, with parts removed for clarity.

### BEST MODES FOR CARRYING OUT THE INVENTION

Number 1 indicates as a whole a molding apparatus for molding plastic components, such as opening and/or outpouring devices, onto a multilayer packaging material.

Molding apparatus 1 may be part of a packaging machine for producing composite packages for a pourable product, in particular a pourable food product such as pasteurized milk, fruit juice, wine, tomato sauce, salt, sugar, emulsions, beverages with pulp etc.

In particular, each composite package comprises at least a main body formed from the multilayer packaging material and at least one respective opening and/or outpouring device configured to allow to access and/or to outpour, in particular after a manipulation of the opening and/or outpouring device, the pourable product packaged within the respective composite package. In particular, the manipulation of the opening and/or outpouring device may be reversible or irreversible.

One example of an opening and/or outpouring device is a lid-spout assembly arranged about a designated pour opening area of the main body, in particular a top wall of the main body. Such an example of opening and/or outpouring device may comprise a spout arranged about the designated pour opening area and a lid, which is configured to selectively close and open a pouring outlet of the spout. In order to access and/or outpour the pourable product from the respective package, removal of the lid is required, which typically is reversible, meaning that the lid can be newly coupled to the spout.

A further example of an opening and/or outpouring device is one which comprises a spout arranged about a designated pour opening area of the main body, in particular a top wall of the main body, while the package further comprises a closure element removably connected to the spout.

While in the first example, both the spout and the lid may be obtained during a single molding step, in the second case only the spout is obtained during a single molding step and the closure element is coupled to the spout afterwards.

Another example of an opening and/or outpouring device is a strip provided on the main body and which can be removed from the respective main body for creating an outlet hole and/or for allowing to at least partially separate two portions of the respective main body from one another.

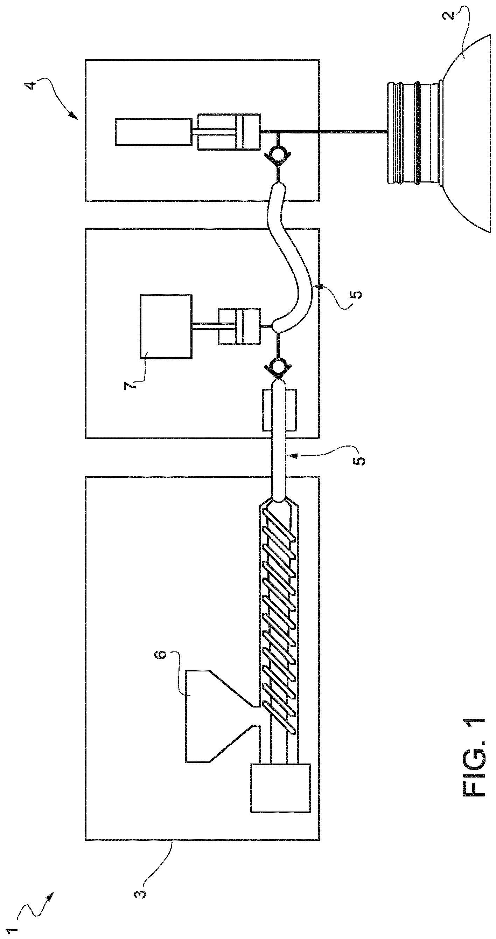

An even further example is an opening and/or outpouring device 2 (see Figure 1), which defines a top portion of the composite package, and which is molded to the main body. In this particular case, the main body comprises a base wall and a side wall erecting from the base wall and the opening and/or outpouring device is molded to the side wall (in particular, the main body is void of a top wall). The opening and/or outpouring device may comprise a shoulder being in direct contact with the side wall, a collar connected to and extending from the shoulder and having a pour opening. Optionally, opening and/or outpouring device 2 may also comprise a membrane removably attached to the neck and closing the pour opening. Additionally, composite packages of this type, may also comprise a closure element removably coupled to opening and/or outpouring device 2.

In more detail, the multilayer packaging material may comprise a layer of fibrous material, such as e.g. a paper or cardboard layer, and at least two layers of heat-seal plastic material, e.g. polyethylene, interposing the layer of fibrous material in between one another. One of these two layers of heat-seal plastic material defines the inner face of the main body eventually contacting the pourable product.

The web of packaging material may also comprise a layer of gas- and light-barrier material, e.g. aluminum foil or ethylene vinyl alcohol (EVOH) film, in particular being arranged between one of the layers of the heat-seal plastic material and the layer of fibrous material. Furthermore, the multilayer packaging material may also comprise a further layer of heat-seal plastic material being interposed between the layer of gas- and light-barrier material and the layer of fibrous material.

In particular, the packaging machine may be configured to process a web of the multilayer packaging material and to form the main bodies from the web of the multilayer packaging material.

Preferentially, the web of multilayer packaging material may comprise a plurality of repeat units, in particular successively arranged (and equally spaced) with respect to one another along the web of the multilayer packaging material. In particular, each repeat unit forms the basis of one respective main body.

In particular, each repeat unit may be defined by one respective pattern present on the web of the multilayer packaging material. Even more particular, the pattern is substantially identical for all repeat units and may also differ in minor details from the other ones - minor differences may e.g. be the presence of information tags indicating a production day, a production lot, personalized information or similar.

In particular, molding apparatus 1 may be configured to either mold the respective opening and/or outpouring device onto the multilayer packaging material when being in a (substantially) flat configuration or onto the at least partially formed main body.

In other words, opening and/or outpouring devices such as the above-mentioned lid-spout assemblies or the ones having a spout and a (post-applied) closure element may be molded around respective designated pour opening areas, each one present on one respective repeat unit of the web of the multilayer packaging material. Then, the packaging machine may be configured to form a tube from the web of the multilayer packaging material, to longitudinally seal the tube, to fill the tube with the pourable product and to transversally seal and cut the tube.

Alternatively, the packaging machine may be configured to form and fill the packages from single blanks of the multilayer packaging material.

When reverting to the case of opening and/or outpouring devices 2, opening and/or outpouring devices 2 may be molded to the respective partially formed main bodies. In particular, in these cases, the packaging machine is configured to form a tubular precursor of the main body from the multilayer packaging material (e.g. from a respective blank of the multilayer packaging material, which may be fed as a single blank into the packaging machine or which may be obtained by cutting a web of the multilayer packaging material within the packaging machine), the tubular precursor having two open ends. Then, molding apparatus 1 may be configured to mold opening and/or outpouring device 2 to a first open end of the open ends. Furthermore, the packaging machine is configured to fill the pourable product through a second open end of the open ends, the second open end being opposite to the first open end. Finally, the packaging machine is configured to fold the second open end so as to form a sealed bottom wall of the package.

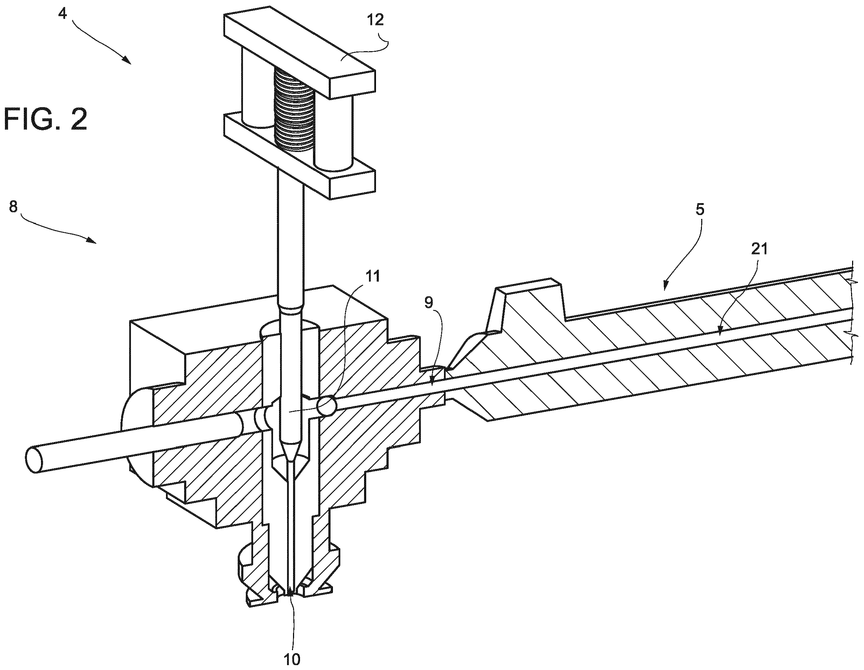

With reference to Figures 1 and 2, molding apparatus 1 comprises at least:
- one conditioning apparatus 3 configured to prepare the molten polymer from solid polymer precursors, such as solid polymer pellets;
- one or more injection devices 4, each one having at least one mold unit couplable to the multilayer packaging material and configured to inject a molten polymer into the mold unit so as to form the plastic component, in particular the opening and/or outpouring device; and
- one or more hoses 5, each one fluidically connecting conditioning apparatus 3 with one respective injection device 4 and configured to direct the molten polymer from conditioning apparatus 3 to the respective injection device 4.

In more detail, conditioning apparatus 3 may comprise:
- an extruder 6 configured to receive the solid polymer precursors and to melt the solid polymer precursors; and
- an accumulator 7 configured to receive the molten polymer from extruder 5 and to maintain the molten polymer at a (substantially) constant pressure.

Preferentially, each hose 5 fluidically connects accumulator 7 with the respective injection device 4.

According to the specific example shown, molding apparatus 1, in particular conditioning apparatus 3, may comprise a further hose 5 fluidically connecting extruder 6 and accumulator 7 with one another so that the molten polymer is directed from extruder 6 to accumulator 7.

With reference to Figures 1 and 2, each injection device 4 comprises at least one injection head 8 having an inlet 9 for receiving the molten polymer from the respective hose 5 and an outlet 10 for directing the molten polymer into the respective mold unit. Additionally, each injection head 8 may comprise one respective shutter 11 for selectively closing and opening the outlet 10 and an actuator 12 for moving shutter 11 between a closing position and an opening position in which shutter 11 respectively closes and opens outlet 10.

Moreover, each molding unit comprises a cavity configured to receive the molten polymer from the respective injection device 4, in particular the respective injection head 8, and configured to define the shape of the respective opening and/or outpouring device. Furthermore, each molding unit comprises one or more distribution channels (not shown) configured to receive the molten polymer from the respective injection device 4, in particular the respective injection head 8.

Each hose 5 (substantially) extends along a central axis A (even though hose 5 may present curved portions).

Furthermore, each hose 5 presents a multilayer-structure comprising at least:
- a core tube 20 having and/or delimiting a conveying space 21 for receiving and guiding the molten polymer;
- a heating device, in particular for heating the molten polymer so as to maintain the molten polymer in the molten state; and
- a plurality of layers arranged around core tube 20 and on top of one another.

At least one of the core tube and/or one or more of the plurality of layers comprises and/or consists of a graphene-based material and/or pyrolytic graphite and/or silicon oxide(s) (SiOx).

The graphene-based material may include and/or comprise graphene and/or graphene oxide and/or reduced graphene oxide and/or graphene paper and/or graphene sheet and/or an applied graphene dispersion and/or a graphitic coating.

More specifically, the graphene-based material may be provided in one or more layers.

Most preferably, the graphene-based material may comprise a major amount of graphene and/or reduced graphene oxide, i.e. graphene obtained by reducing from graphene oxide.

More specifically, the graphene-based material may comprise at least from 50 weight-% or at least from 60 weight-% or at least from 70 weight-% or at least from 80 weight-% or at least from 90 weight-% or at least from 95 weight-% or up to 100 weight-%, based on dry weight, of graphene and/or reduced graphene oxide.

The definition of "graphene" in the term "graphene-based" includes reduced graphene oxide, monolayers of graphene, and/or of reduced graphene oxide, exfoliated flakes of monolayer graphene, and/or reduced graphene oxide, as well as (few-) multilayer graphene flakes, or so-called graphene/graphite nano-platelets, i.e. partly exfoliated flake-shaped stacks of plurality layers, in particular up to 10 or up to 20 layers, of monolayer graphene and/or reduced graphene oxide.

In an embodiment, the graphene-based material may comprise a layer obtained from a dispersion of such exfoliated flakes of graphene and/or graphene oxide and/or reduced graphene oxide and/or multilayer graphene nano-platelets (having up to a number of 20, preferably up to a number of 10, stacked monolayer flakes).

Moreover, exfoliated flake-shaped graphene is obtainable e.g. by exfoliation of graphite particles or by reduction of flake-shaped graphene oxide or microfluidic exfoliation or electrochemical expansion or via ultrasonic exfoliation (which is also in an exfoliated state, inherently to its manufacturing process). Depending on the nature and performance of the exfoliation process the proportion of pure monolayer graphene flakes versus such multilayer graphene flakes may thus vary.

Preferentially, only smaller amounts, i.e. lower than 40 weight-% or lower than 20 weight-% or lower than 5 weight-%, based on dry weight of the graphene-based material, may be graphite flakes that have been exfoliated to a number of graphene monolayer flakes higher than 20 graphene monolayer flakes, but which have a smaller lateral particle size than bulky graphite particles, i.e. so-called "multilayer graphite nano-platelets", which are thus nano-sized., i.e. having a lateral size smaller than 100 nm.

In particular, such smaller amounts of such laterally nano-sized graphite flakes may be present as long they do not reduce the performance of the graphene-based material too much. Preferably, nano-graphite flakes/platelets are present in the composition only in lower amounts than 20 weight-% or 5 weight-% or lower, dry weight.

Preferentially, graphene or graphite or graphene paper may have a thermal conductivity (in a planar direction) varying between 1600 and 1800 W/mK, a thermal resistance up to 400°C (in an oxidative environment) and a melting point of 1200 °C.

In more detail, pyrolytic graphite may comprise a plurality of graphene sheets and/or graphene layers, which may stack with Wan des Waals interactions within one or more of the graphene layers and may form graphitic domains. In comparison with graphene paper or graphene sheets, the pyrolytic graphite comes along with lower costs, while at the same time having similar physical properties.

The Applicant has observed that by providing for at least one of core tube 20 and/or one of the layers comprising the graphene-based material and/or pyrolytic graphite and/or silicon oxide(s) (SiOx) it is possible to significantly increase the lifetime of hose 5, in particular as core tube 20 is less prone to degradation. This is in particular due to the graphene- based material and/or the pyrolytic graphite and/or the silicon oxide(s) having oxygen barrier properties providing thereby for a significant reduction in oxygen permeability.

In particular, each layer may define a respective tubular structure itself.

In more detail, each core tube 20 may comprise (in particular, consist of) a food grade material. More specifically, each core tube 20 may comprise one or more of polytetrafluoroethylene (PTFE), polyether ether ketone (PEEK), nylon or ethylene vinyl alcohol (EVOH).

Each hose 5 may comprise at least one cover layer 22, in particular defining the outermost layer of hose 5. More specifically, cover layer 22 may be radially external and core tube 20 may be radially internal with respect to central axis A. Even more specifically, all other layers of hose 5 are interposed between core tube 20 and cover layer 22.

In further detail, cover layer 22 is provided for protection and safety reasons.

Preferentially, cover layer 22 may comprise and/or consist of a polymer, in particular a polymer allowing for mechanical wear protection.

Each hose 5 may also comprise a thermal insulation layer 23, e.g. comprising, in particular consisting of, a thermal insulating fiber and/or polymer. Preferentially, thermal insulation layer 23 may be arranged in contact with cover layer 22, i.e. thermal insulation layer 23 is radially external with respect to core tube 20 and radially internal with regard to cover layer 22.

Furthermore, hose 5 may comprise a reinforcement layer 24, such as e.g. a braided steel sheath, in particular being interposed between thermal insulation layer 23 and core tube 20.

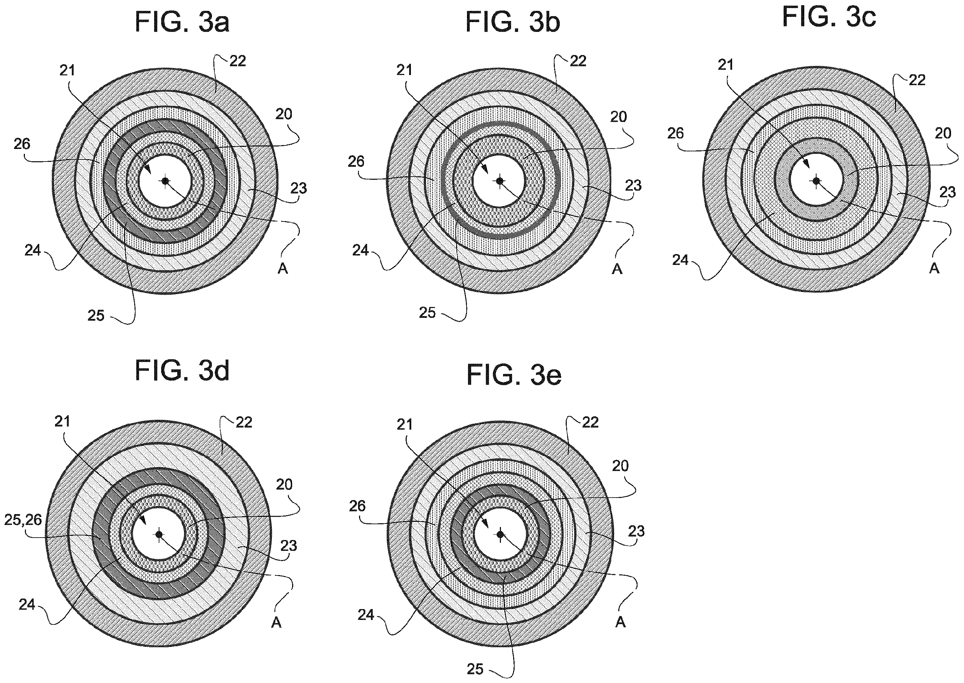

Additionally (see e.g. the variations of Figures 3a, 3b and 3e), hose 5 may also comprise a (distinct) gas barrier layer 25 acting as a gas barrier. According to these variations, gas barrier layer 25 may comprise, in particular may consist of, the graphene-based material and/or pyrolytic graphite and/or silicon oxide(s). More specifically, the graphene-based material and/or pyrolytic graphite and/or silicon oxide(s) of gas barrier layer 25 may define the gas barrier properties of gas barrier layer 25.

Furthermore, the heating device may comprise a heating layer 26, in particular being in contact with thermal insulation layer 23. More specifically, heating layer 26 is radially inside with respect to thermal insulation layer 23.

Moreover, the heating device may comprise an electrical energy supply unit operatively coupled to heating layer 26 so as to generate an electrical current within heating layer 26 thereby generating heat.

According to the variations of Figures 3a to 3c and 3e, heating layer 26 may comprise an electrical wire being arranged as a spiral.

Alternatively (see Figure 3d) or additionally, heating layer 26 may comprise and/or consist of the graphene-based material and/or pyrolytic graphite and may be electrically connected to the electrical energy supply unit. In particular, the electrical energy supply unit may be configured to heat the graphene-based material and/or the pyrolytic graphite by means of the electrical energy.

Additionally (see Figure 3d), heating layer 26 may comprise the graphene-based material and/or the pyrolytic graphite and may act as a combined gas barrier and heating layer.

Alternatively, heat layer 26 and gas barrier layer 25 are distinct and heat layer 26 may comprise graphene-based material and/or the pyrolytic graphite and gas barrier layer 25 may comprise the graphene-based material and/or the pyrolytic graphite and/or the silicon oxide (s) .

According to some possible embodiments, each hose 5 may also comprise a temperature measuring device for determining the temperature of heating layer 26 and/or the molten polymer within core tube 20. Furthermore, the electrical energy supply unit may be controlled in dependence of the temperature measured by the temperature measuring device so as to guarantee the maintenance of the molten polymer in the molten state.

According to some possible variations (see e.g. Figures 3a to 3d) reinforcement layer 24 may be in contact with core tube 20. Furthermore, reinforcement layer 24 may be in contact with and interposed between core tube 20 and gas barrier layer 25 (see e.g. Figure 3e).

With reference to the variation of hose 5 shown in Figure 3c, core tube 20 may comprise graphene-based material and/or pyrolytic graphite and/or silicon oxide(s). According to such a variation, no specific gas barrier layer may be foreseen, as the gas barrier properties are already provided for by the graphene-based material and/or the pyrolytic graphite and/or the silicon oxide(s) comprised within core tube 20. In addition, if a further gas barrier layer 25 is present, also this gas barrier layer 25 may comprise graphene-based material and/or pyrolytic graphite and/or silicon oxide(s).

According to some embodiments, core tube 20 may comprise the graphene-based material. In particular, core tube 20 may be obtained from a mixture of a polymer and graphene.

In more detail, graphene particles and/or graphene powders may be dispersed in a polymer matrix of the polymer inserted as a filler. The polymer matrix of the polymer may additionally comprise other fillers.

In even more detail, the graphene particles and/or the graphene powders may be single layer graphene particles and/or graphene powders.

Alternatively, the graphene particles and/or graphene powders may be multilayer graphene. In particular, the multilayer graphene may comprise up to 5, up to 10, or up to 20, single graphene layers.

Alternatively, the graphene particles and/or graphene powders may be a mixture of single layer graphene and multilayer graphene and, in particular also graphitic particles (up to 40% in dry weight).

Preferentially, heating layer 26 and/or gas barrier layer 25 and/or reinforcement layer 24 may be interposed between thermal insulation layer 23 and core tube 20.

According to some possible variations (see e.g. Figures 3a to 3d) reinforcement layer 24 may be in contact with core tube 20. Furthermore, reinforcement layer 24 may be in contact with and interposed between core tube 20 and gas barrier layer 25 (see e.g. Figure 3e).

Alternatively, gas barrier layer 25 may be in contact with and may be interposed between reinforcement layer 24 and core tube 20.

According to some possible non-limiting embodiments, gas barrier layer 25 may be provided in the form of a foil, sheet or (adhesive) tape (see e.g. Figures 3a, 3d, 3e) .

Alternatively, gas barrier layer 25 may be provided in the form of a coating (see e.g. Figure 3b). In particular, gas barrier layer 25 may be coated onto one of the other layers and/or core tube 20. In the variation of Figure 3b, gas barrier layer 25 may be coated onto reinforcement layer 24 and/or on heating layer 26. According to a further variation not shown, gas barrier layer 25 may be interposed between reinforcement layer 24 and core tube 26 and may be coated onto reinforcement layer 24 and/or core tube 20.

The advantages of hose 5 according to the present invention will be clear from the foregoing description.

In particular, by providing at least one layer and/or core tube 20 of hose 5 with graphene-based material and/or pyrolytic graphite and/or silicon oxide(s) it is possible to increase the lifetime of hose 5. This also means that the maintenance frequency of molding apparatus 1 can be reduced.

Clearly, changes may be made to molding apparatus 1 and/or hose 5 and/or the packaging machine as described herein without, however, departing from the scope of protection as defined in the accompanying claims.

## Claims

1. Hose (5) for a molding apparatus (1), the hose (5) having a multilayer-structure comprising at least:
- a core tube (20) having a conveying space (21) for receiving and guiding a molten polymer;
- a heating device (26) for maintaining the molten polymer in the molten state; and
- a plurality of layers (22, 23, 24, 25, 26) arranged around the core tube (20) and on top of one another;
wherein at least one of the core tube (20) and/or one or more of the plurality of layers (22, 23, 24, 25, 26) comprises graphene-based material and/or pyrolytic graphite and/or silicon oxide (SiOx).

2. Hose according to claim 1, comprising at least one gas barrier layer (25) having graphene-based material and/or pyrolytic graphite and/or silicon oxide (SiOx).

3. Hose according to any one of the preceding claims, wherein the heating device comprises a heating layer (26);
wherein the heating layer (26) comprises graphene-based material and/or pyrolytic graphite;
wherein the heating device also comprises an electrical energy supply unit configured to heat the graphene-based material and/or the pyrolytic graphite of the heating layer (26).

4. Hose according to claim 3, wherein the heating layer (26) is a combined gas barrier and heating layer.

5. Hose according to any one of the preceding claims, and further comprising a cover layer (22), the other layers of the plurality of layers (22, 23, 24, 25, 26) being interposed between the cover layer (22) and the core tube (20).

6. Hose according to any one of the preceding claims, and further comprising a thermal insulation layer (23) .

7. Hose according to any one of the preceding claims, wherein the heating device comprises an electrical energy supply unit.

8. Hose according to any one of the preceding claims, wherein the core tube (20) comprises a food grade material.

9. Hose according to any one of the preceding claims, and further comprising a reinforcement layer (24).

10. Hose according to any one of the preceding claims, wherein the core tube (20) and/or one or more of the plurality of layers (22, 23, 24, 25, 26) comprises graphene-based material;
the graphene-based material comprises graphene and/or graphene oxide and/or reduced graphene oxide and/or graphene paper and/or graphene sheets and/or an applied graphene dispersion and/or a graphitic coating.

11. Molding apparatus (1) for molding a plastic component onto a multilayer packaging material comprising:
- a conditioning apparatus (3) configured to prepare the molten polymer from solid polymer precursors;
- an injection device (4) having at least one mold unit couplable to the multilayer packaging material and configured to inject a molten polymer into the mold unit so as to form the component; and
- a hose (5) according to any one of the preceding claims fluidically connecting the conditioning apparatus (3) with the injection device (4) and configured to direct the molten polymer through the core tube (20) from the conditioning apparatus (3) to the injection device (4).

12. Molding apparatus according to claim 11, wherein the conditioning apparatus (3) comprises an extruder (6) configured to receive the solid polymer precursors and to melt the solid polymer precursors and an accumulator (7) configured to receive the molten polymer from the extruder (6) ;
wherein the hose (5) fluidically connects the accumulator (7) with the injection device (4).

13. Molding apparatus according to claim 12, wherein the conditioning apparatus (3) comprises a further hose (5) according to any one of the claims 1 to 10;
wherein the further hose (5) fluidically connects the extruder (6) and the accumulator (7) with one another.

14. Packaging machine for forming composite packages, the composite packages having at least a portion formed from a multilayer packaging material and a plastic component molded onto the multilayer packaging material;
the packaging machine comprises at least one molding apparatus (1) according to any one of claims 11 to 13 for molding the plastic component onto the multilayer packaging material.
